# FASCICULE DE BREVET EUROPEEN

(11) **EP 3 264 551 B1**
(45) Date de publication et mention de la délivrance du brevet: **24.03.2021**
(21) Numéro de dépôt: 17177990.3
(22) Date de dépôt: 27.06.2017
(51) Int. Cl.: H02H 3/24, H02J 9/06

(54) **SYSTÈME ÉLECTRIQUE DESTINÉ À ÊTRE CONNECTÉ À DEUX ALIMENTATIONS ÉLECTRIQUES ET INSTALLATION ÉLECTRIQUE COMPORTANT UN TEL SYSTÈME ÉLECTRIQUE**
ELEKTRISCHES SYSTEM, DAS FÜR DEN ANSCHLUSS AN ZWEI STROMZULEITUNGEN BESTIMMT IST, UND ELEKTRISCHE ANLAGE, DIE EIN SOLCHES ELEKTRISCHES SYSTEM UMFASST
ELECTRICAL SYSTEM INTENDED FOR BEING CONNECTED TO TWO ELECTRICAL POWER SUPPLIES AND ELECTRICAL INSTALLATION COMPRISING SUCH AN ELECTRICAL SYSTEM

(30) Priorité: 29.06.2016 FR 1656061
(43) Date de publication de la demande: 03.01.2018
(73) Titulaire: Valeo Systemes de Controle Moteur, 95800 Cergy Saint Christophe (FR)
(72) Inventeur: FILIPE, Raphael, 94046 CRETEIL (FR)
(74) Mandataire: Cardon, Nicolas

(56) Documents cités:
- JP-U- H0 530 929
- US-A- 3 967 169
- US-A1- 2005 041 352
- US-A1- 2005 141 208
- US-A1- 2008 265 682
- US-A1- 2010 141 216
- US-A1- 2014 306 536

## Description

### DOMAINE TECHNIQUE

La présente invention concerne les systèmes électriques destinés à être connectés à deux alimentations électriques.

Dans la description et les revendications qui vont suivre, le terme de « borne » est utilisé pour désigner n'importe qu'elle point d'un conducteur électrique.

### ARRIÈRE-PLAN TECHNOLOGIQUE

Les documents US 2005/0041352 A1 et JP H05 30929 U décrivent des systèmes électriques comportant un dispositif électrique connecté d'une part à une première alimentation électrique et d'autre part à une deuxième alimentation électrique.

On connait de l'état de la technique un système électrique comportant :
- une première borne d'entrée positive et une première borne d'entrée négative destinées à être respectivement connectées à une borne positive et une borne négative d'une première alimentation électrique présentant une première tension entre sa borne positive et sa borne négative,
- une deuxième borne d'entrée positive et une deuxième borne d'entrée négative destinées à être respectivement connectées à une borne positive et une borne négative d'une deuxième alimentation électrique présentant une deuxième tension entre sa borne positive et sa borne négative, la deuxième tension étant supérieure à la première tension,
- un dispositif électrique connecté, d'une part, aux premières bornes d'entrée et, d'autre part, aux deuxièmes bornes d'entrées, le dispositif électrique présentant un chemin de conduction électrique entre la deuxième borne d'entrée positive et la première borne d'entrée négative.

Il est connu de connecter la première alimentation ou la deuxième alimentation au dispositif électrique au travers d'une isolation galvanique. Le but de l'isolation galvanique est d'isoler les deux alimentations, c'est-à-dire d'éviter que du courant fourni par la deuxième alimentation ne traverse le dispositif électrique pour rejoindre la première alimentation.

L'invention a pour but de fournir une isolation entre les deux alimentations ne nécessitant pas d'isolation galvanique.

### RÉSUMÉ DE L'INVENTION

A cet effet, il est proposé selon la revendication 1 un système électrique comportant :
- une première borne d'entrée positive et une première borne d'entrée négative destinées à être respectivement connectées à une borne positive et une borne négative d'une première alimentation électrique présentant une première tension entre sa borne positive et sa borne négative,
- une deuxième borne d'entrée positive et une deuxième borne d'entrée négative destinées à être respectivement connectées à une borne positive et une borne négative d'une deuxième alimentation électrique présentant une deuxième tension entre sa borne positive et sa borne négative, la deuxième tension d'alimentation étant supérieure à la première tension,
- un dispositif électrique connecté, d'une part, aux premières bornes d'entrée et, d'autre part, aux deuxièmes bornes d'entrées, le dispositif électrique présentant un chemin de conduction électrique entre la deuxième borne d'entrée positive et la première borne d'entrée négative,
- un premier interrupteur au travers duquel le dispositif électrique est connectée à la deuxième borne d'entrée positive,
- un dispositif de détection configuré pour :
   - détecter si une tension entre la deuxième borne d'entrée positive et la deuxième borne d'entrée négative est inférieure ou égale à un seuil prédéterminé,
   - en cas d'une telle détection, commander l'ouverture du premier interrupteur.

Grâce à l'invention, si un incident se produit du côté de la deuxième alimentation entraînant une baisse de tension, voire un court-circuit, entre la deuxième borne d'entrée positive et la deuxième borne d'entrée négative, le premier interrupteur est ouvert et isole ainsi les deux alimentations.

De façon optionnelle, le seuil prédéterminé est inférieur à 20 V, par exemple nul.

De façon optionnelle également, le premier interrupteur comporte un transistor à effet de champ à grille métal-oxyde.

Le système électrique comporte en outre un deuxième interrupteur au travers duquel le dispositif électrique est connecté à la deuxième borne d'entrée négative, et le dispositif de détection est en outre configuré pour commander l'ouverture du deuxième interrupteur en cas de détection que la tension entre la deuxième borne d'entrée positive et la deuxième borne d'entrée négative est inférieure ou égale au seuil prédéterminé.

De façon optionnelle également, le deuxième interrupteur comporte un transistor à effet de champ à grille métal-oxyde.

De façon optionnelle également, le dispositif électrique est configuré pour mesurer la deuxième tension de la deuxième alimentation électrique.

De façon optionnelle également, le dispositif électrique comporte : une interface configurée pour réduire la deuxième tension et fournir un signal représentatif de la deuxième tension ; et un dispositif de calcul configuré pour mesurer au cours du temps la deuxième tension à partir du signal représentatif de la deuxième tension.

De façon optionnelle également, le dispositif de calcul comporte un microcontrôleur.

De façon optionnelle également, le signal représentatif de la deuxième tension est analogique, le dispositif de calcul comporte un convertisseur analogique numérique configuré pour numériser le signal analogique représentatif de la deuxième tension, et le dispositif de calcul est configuré pour mesurer au cours du temps la deuxième tension à partir du signal numérisé représentatif de la deuxième tension.

De façon optionnelle également, le système électrique est configuré pour commander un convertisseur de tension.

### DESCRIPTION DES FIGURES

La figure 1 est un schéma électrique d'une installation électrique mettant en œuvre l'invention.
La figure 2 est un schéma électrique de l'installation électrique de la figure 1 lors de la réalisation d'un premier test selon la norme LV148.
La figure 3 est un schéma électrique de l'installation électrique de la figure 1 lors de la réalisation d'un deuxième test selon la norme LV148.

### DESCRIPTION DÉTAILLÉE

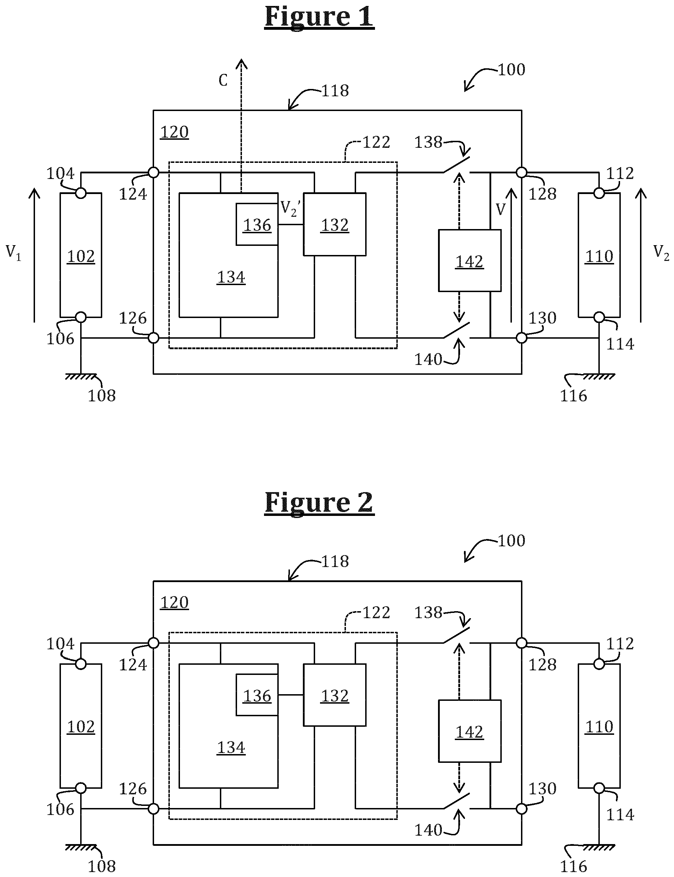

En référence à la figure 1, une installation électrique 100 mettant en œuvre l'invention va à présent être décrite.

L'installation électrique 100 comporte une première alimentation électrique 102 présentant une borne positive 104 et une borne négative 106 connectée à une première masse électrique 108. La première alimentation électrique 102 est configurée pour présenter une première tension V₁ entre sa borne positive 104 et sa borne négative 106 et, dans l'exemple décrit, pour fournir un courant inférieur à 10 A.

La première tension V₁ est une tension continue, par exemple comprise entre 10 V et 20 V. Dans l'exemple décrit, la première tension vaut 12 V. La première alimentation électrique 102 comporte par exemple une première batterie (non représentée).

L'installation électrique 100 comporte en outre une deuxième alimentation électrique 110 présentant une borne positive 112 et une borne négative 114 connectée à une deuxième masse électrique 116. La deuxième alimentation électrique 110 est configurée pour présenter une deuxième tension V₂ entre sa borne positive 112 et sa borne négative 114 et, dans l'exemple décrit, pour fournir un courant supérieur à 100 A.

La deuxième tension V₂ est une tension continue supérieure à la première tension V₁, par exemple comprise entre 30 V et 60 V. Dans l'exemple décrit, la deuxième tension V₂ vaut 48 V. La deuxième alimentation électrique 110 comporte par exemple une deuxième batterie (non représentée).

La première masse électrique 108 et la deuxième masse électrique 116 peuvent être différentes et présenter une tension non nulle entre elles, ou bien être connectées l'une à l'autre pour ne former qu'une seule masse électrique.

L'installation électrique 100 comporte en outre un système de commande 118 d'un convertisseur de tension (non représenté) tel qu'un onduleur ou un convertisseur continu-continu. Le convertisseur de tension est par exemple destiné à convertir la deuxième tension V₂, par exemple en une tension variable ou alternative.

Le système de commande 118 comporte tout d'abord une première borne d'entrée positive 124 et une première borne d'entrée négative 126 destinées à être respectivement connectées à la borne positive 104 et la borne négative 106 de la première alimentation électrique 102.

Le système de commande 118 comporte en outre une deuxième borne d'entrée positive 128 et une deuxième borne d'entrée négative 130 destinées à être respectivement connectées à la borne positive 112 et la borne négative 114 de la deuxième alimentation électrique 110.

Dans l'exemple décrit, le système de commande 118 comporte une carte électronique 120, également appelée circuit imprimé, sur laquelle les éléments du système de commande 118 décrits ci-dessous sont montés.

Le système de commande 118 comporte un dispositif de mesure 122 configuré pour mesurer au cours du temps la deuxième tension V₂ de la deuxième alimentation électrique 110 et pour fournir un signal de commande C au convertisseur de tension à partir notamment de la mesure de la deuxième tension V₂.

Le dispositif de mesure 122 comporte une interface 132 connectée aux premières bornes d'entrée 124, 126 pour son alimentation électrique et aux deuxième bornes d'entrée 128, 130 pour recevoir la deuxième tension V₂. L'interface 132 est configurée pour réduire la deuxième tension V₂ et ainsi fournir un signal analogique V₂' par rapport à la première masse 108 représentatif de la deuxième tension V₂, mais à un niveau électrique inférieur, par exemple au moins deux fois inférieur, de préférence au moins quatre fois inférieur à la deuxième tension V₂.

Le dispositif de mesure 122 comporte en outre un dispositif de calcul 134 connecté aux premières bornes d'entrée 124, 126 pour son alimentation électrique et à l'interface 132 pour recevoir le signal analogique V₂'. Plus précisément, le dispositif de calcul 134 comporte un convertisseur analogique-numérique 136 configuré pour recevoir le signal analogique V₂' et pour le numériser. Le dispositif de calcul 134 est configuré pour mesurer au cours du temps la deuxième tension V₂ à partir du signal numérisé V₂'. Le dispositif de calcul 134 comporte par exemple un microcontrôleur.

Ainsi, le dispositif de mesure 122 présente des chemins de conduction électrique, au travers de l'interface 132 et/ou du dispositif de calcul 134, entre toutes les bornes d'entrée 124, 126, 128, 130 et en particulier entre la deuxième borne d'entrée positive 128 et la première borne d'entrée négative 126.

Le système de commande 118 comporte en outre un premier interrupteur 138 au travers duquel le dispositif de mesure 122 est connecté à la deuxième borne d'entrée positive 128. Le premier interrupteur 138 comporte par exemple un transistor à effet de champ à grille métal-oxyde (de l'anglais « Metal Oxide Semiconductor Field Effect Transistor » ou MOSFET).

Le système de commande 118 comporte en outre un deuxième interrupteur 140 au travers duquel le dispositif de mesure 122 est connecté à la deuxième borne d'entrée négative 130. Le deuxième interrupteur 140 comporte par exemple un MOSFET.

Les interrupteurs 138, 140 sont de préférence chacun conçu pour supporter une tension de 70 V entre leurs bornes, dans les deux sens d'application de la tension, lors de leur ouverture. Les interrupteurs 138, 140 sont en outre de préférence chacun conçu pour ne laisser passer au plus que 1 µA lorsqu'une tension de 70 V est appliquée entre leurs bornes.

Le système de commande 118 comporte en outre un dispositif de détection 142 connecté à la deuxième borne d'entrée positive 128 et à la deuxième borne d'entrée négative 130. Le dispositif de détection 142 est en outre connecté au premier interrupteur 138 et au deuxième interrupteur 140 pour les commander. Le dispositif de détection 142 est configuré pour détecter si une tension V entre la deuxième borne d'entrée positive 128 et à la deuxième borne d'entrée négative 130 est inférieure ou égale à un seuil prédéterminé et, en cas d'une telle détection, commander l'ouverture du premier interrupteur 138 et du deuxième interrupteur 140. Le seuil prédéterminé est par exemple inférieur ou égal à 20 V, par exemple nul.

Le fonctionnement du système électrique de la figure 1 lors des tests de la norme LV148 va à présent être décrit.

En référence à la figure 2, pour le premier test de la norme LV148, la deuxième borne d'entrée négative 130 est déconnectée de la borne négative 114 de la deuxième alimentation électrique 110 et de la deuxième masse électrique 116.

Le potentiel à la deuxième borne d'entrée négative 130 devient égal au potentiel de la deuxième borne d'entrée positive 128. Ainsi, le dispositif de détection 142 détecte que la tension V est inférieure ou égale au seuil prédéterminé et commande l'ouverture du premier interrupteur 138 et du deuxième interrupteur 140.

L'ouverture du premier interrupteur 138 empêche ainsi le courant fourni par la deuxième alimentation électrique 110 par sa borne positive 112 de s'écouler vers la première masse électrique 108 au travers du dispositif de mesure 122.

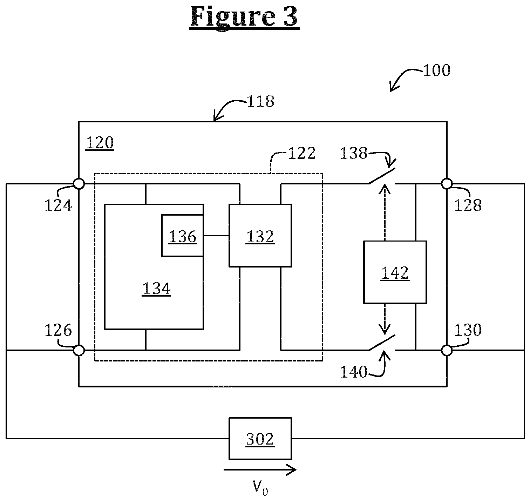

En référence à la figure 3, pour le deuxième test de la norme LV148, d'une part, les premières bornes d'entrée 124, 126 sont court-circuitées et, d'autre part, les deuxièmes bornes d'entrée 128, 130 sont également court-circuitées. En outre, les deuxièmes bornes d'entrée 128, 130 et les premières bornes d'entrée 124, 126 sont respectivement connectées à une borne positive et une borne négative d'une alimentation électrique de test 302 fournissant une tension continue V₀ de 70 V.

Du fait du court-circuit des deuxièmes bornes d'entrée 128, 130, la tension V entre elles s'annule. Ainsi, le dispositif de détection 142 détecte que la tension V est inférieure ou égale au seuil prédéterminé et commande l'ouverture du premier interrupteur 138 et du deuxième interrupteur 140.

Ainsi, les interrupteurs 138, 140 ouverts isolent les premières bornes d'entrée 124, 126 par rapport aux deuxièmes bornes d'entrée 128, 130 de sorte que l'alimentation électrique de test 302 produit un courant sensiblement nul, en particulier inférieur à 1 µA, au travers du système de commande 118.

La présente invention n'est pas limitée au mode de réalisation décrit précédemment, mais est au contraire définie par les revendications qui suivent. Il sera en effet apparent à l'homme du métier que des modifications peuvent y être apportées.

Par exemple, le dispositif électrique 122 pourrait être configuré pour réaliser une autre fonction que celle de mesurer la deuxième tension V₂.

Par ailleurs, les termes utilisés dans les revendications ne doivent pas être compris comme limités aux éléments du mode de réalisation décrit précédemment, mais doivent au contraire être compris comme couvrant tous les éléments équivalents que l'homme du métier peut déduire à partir de ses connaissances générales.

### RÉFÉRENCES

- 100: installation électrique
- 102: première alimentation électrique
- 104: borne positive
- 106: borne négative
- 108: première masse électrique
- 110: deuxième alimentation électrique
- 112: borne positive
- 114: borne négative
- 116: deuxième masse électrique
- 118: système de commande
- 120: carte électronique
- 122: dispositif de mesure
- 124: première borne d'entrée positive
- 126: première borne d'entrée négative
- 128: deuxième borne d'entrée positive
- 130: deuxième borne d'entrée négative
- 132: interface
- 134: dispositif de calcul
- 136: convertisseur analogique-numérique
- 138: premier interrupteur
- 140: deuxième interrupteur
- 142: dispositif de détection

## Revendications

1. Système électrique (118) comportant :
- une première borne d'entrée positive (124) et une première borne d'entrée négative (126) destinées à être respectivement connectées à une borne positive (104) et une borne négative (106) d'une première alimentation électrique (102) présentant une première tension (V₁) entre sa borne positive (104) et sa borne négative (106),
- une deuxième borne d'entrée positive (128) et une deuxième borne d'entrée négative (130) destinées à être respectivement connectées à une borne positive (112) et une borne négative (114) d'une deuxième alimentation électrique (110) présentant une deuxième tension (V₂) entre sa borne positive (112) et sa borne négative (114), la deuxième tension d'alimentation (V₂) étant supérieure à la première tension (V₁),
- un dispositif électrique (122) connecté, d'une part, aux premières bornes d'entrée (124, 126) et, d'autre part, aux deuxièmes bornes d'entrées (128, 130), le dispositif électrique (122) présentant un chemin de conduction électrique entre la deuxième borne d'entrée positive (128) et la première borne d'entrée négative (126),
- un premier interrupteur (138) au travers duquel le dispositif électrique (122) est connecté à la deuxième borne d'entrée positive (128),
- un dispositif de détection (142) configuré pour :
- détecter si une tension (V) entre la deuxième borne d'entrée positive (128) et la deuxième borne d'entrée négative (130) est inférieure ou égale à un seuil prédéterminé,
- en cas d'une telle détection, commander l'ouverture du premier interrupteur (138),
**caractérisé en ce qu'**il comprend en outre :
- un deuxième interrupteur (140) au travers duquel le dispositif électrique (122) est connecté à la deuxième borne d'entrée négative (130), et dans lequel le dispositif de détection (142) est en outre configuré pour commander l'ouverture du deuxième interrupteur (140) en cas de détection que la tension (V) entre la deuxième borne d'entrée positive (128) et la deuxième borne d'entrée négative (130) est inférieure ou égale au seuil prédéterminé.

2. Système électrique (118) selon la revendication 1, dans lequel le seuil prédéterminé est inférieur à 20 V, par exemple nul.

3. Système électrique (118) selon la revendication 1 ou 2, dans lequel le premier interrupteur (138) comporte un transistor à effet de champ à grille métal-oxyde.

4. Système électrique (118) selon l'une des revendications 1 à 3, dans lequel le deuxième interrupteur (140) comporte un transistor à effet de champ à grille métal-oxyde.

5. Système électrique (118) selon l'une quelconque des revendications 1 à 4, dans lequel le dispositif électrique (122) est configuré pour mesurer la deuxième tension (V₂) de la deuxième alimentation électrique (110).

6. Système électrique (118) selon la revendication 5, dans lequel le dispositif électrique (122) comporte :
- une interface (132) configurée pour réduire la deuxième tension (V₂) et fournir un signal (V₂') représentatif de la deuxième tension (V₂),
- un dispositif de calcul (134) configuré pour mesurer au cours du temps la deuxième tension (V₂) à partir du signal (V₂') représentatif de la deuxième tension (V₂).

7. Système électrique (118) selon la revendication 6, dans lequel le dispositif de calcul (134) comporte un microcontrôleur.

8. Système électrique (118) selon la revendication 6 ou 7, dans lequel le signal (V₂') représentatif de la deuxième tension (V₂) est analogique, dans lequel le dispositif de calcul (134) comporte un convertisseur analogique numérique (136) configuré pour numériser le signal analogique (V₂') représentatif de la deuxième tension (V₂), et dans lequel le dispositif de calcul (134) est configuré pour mesurer au cours du temps la deuxième tension (V₂) à partir du signal numérisé (V₂') représentatif de la deuxième tension (V₂).

9. Système électrique (118) selon l'une quelconque des revendications 1 à 8, configuré pour commander un convertisseur de tension.

## Patentansprüche

1. Elektrisches System (118), das Folgendes umfasst:
- eine erste positive Eingangsklemme (124) und eine erste negative Eingangsklemme (126), die dazu bestimmt sind, jeweils mit einer positiven Klemme (104) und einer negativen Klemme (106) einer ersten Stromversorgung (102) verbunden zu sein, welche zwischen ihrer positiven Klemme (104) und ihrer negativen Klemme (106) eine erste Spannung (V₁) aufweist,
- eine zweite positive Eingangsklemme (128) und eine zweite negative Eingangsklemme (130), die dazu bestimmt sind, jeweils mit einer positiven Klemme (112) und einer negativen Klemme (114) einer zweiten Stromversorgung (110) verbunden zu sein, welche zwischen ihrer positiven Klemme (112) und ihrer negativen Klemme (114) eine zweite Spannung (V₂) aufweist, wobei die zweite Versorgungsspannung (V₂) größer als die erste Spannung (V₁) ist,
- eine elektrische Vorrichtung (122), die einerseits mit den ersten Eingangsklemmen (124, 126) und andererseits mit den zweiten Eingangsklemmen (128, 130) verbunden ist, wobei die elektrische Vorrichtung (122) zwischen der zweiten positiven Eingangsklemme (128) und der ersten negativen Eingangsklemme (126) einen elektrisch leitenden Pfad aufweist,
- einen ersten Schalter (138), mit dessen Hilfe die elektrische Vorrichtung (122) mit der zweiten positiven Eingangsklemme (128) verbunden wird,
- eine Detektionsvorrichtung (142), die zu Folgendem konfiguriert ist:
- Detektieren, ob eine Spannung (V) zwischen der zweiten positiven Eingangsklemme (128) und der zweiten negativen Eingangsklemme (130) kleiner als oder gleich einem vorgegebenen Schwellenwert ist,
- im Falle einer solchen Detektion, Steuern des Öffnens des ersten Schalters (138),
**dadurch gekennzeichnet, dass** es ferner Folgendes beinhaltet:
- einen zweiten Schalter (140), mit dessen Hilfe die elektrische Vorrichtung (122) mit der zweiten negativen Eingangsklemme (130) verbunden wird, und wobei die Detektionsvorrichtung (142) ferner dazu konfiguriert ist, im Falle einer Detektion, dass die Spannung (V) zwischen der zweiten positiven Eingangsklemme (128) und der zweiten negativen Eingangsklemme (130) kleiner als oder gleich dem vorgegebenen Schwellenwert ist, das Öffnen des zweiten Schalters (140) zu steuern.

2. Elektrisches System (118) nach Anspruch 1, wobei der vorgegebene Schwellenwert kleiner als 20 V, beispielsweise null ist.

3. Elektrisches System (118) nach Anspruch 1 oder 2, wobei der erste Schalter (138) einen Metall-Oxid-Halbleiter-Feldeffekttransistor umfasst.

4. Elektrisches System (118) nach einem der Ansprüche 1 bis 3, wobei der zweite Schalter (140) einen MetallOxid-Halbleiter-Feldeffekttransistor umfasst.

5. Elektrisches System (118) nach einem der Ansprüche 1 bis 4, wobei die elektrische Vorrichtung (122) dazu konfiguriert ist, die zweite Spannung (V₂) der zweiten Stromversorgung (110) zu messen.

6. Elektrisches System (118) nach Anspruch 5, wobei die elektrische Vorrichtung (122) Folgendes umfasst:
- eine Schnittstelle (132), die dazu konfiguriert ist, die zweite Spannung (V₂) zu reduzieren und ein Signal (V₂') zu liefern, das für die zweite Spannung (V₂) repräsentativ ist,
- eine Rechenvorrichtung (134), die dazu konfiguriert ist, die zweite Spannung (V₂) anhand des für die zweite Spannung (V₂) repräsentativen Signals (V₂') über die Zeit zu messen.

7. Elektrisches System (118) nach Anspruch 6, wobei die Rechenvorrichtung (134) einen Mikrocontroller umfasst.

8. Elektrisches System (118) nach Anspruch 6 oder 7, wobei das für die zweite Spannung (V₂) repräsentative Signal (V₂') analog ist, wobei die Rechenvorrichtung (134) einen Analog-Digital-Wandler (136) umfasst, der dazu konfiguriert ist, das für die zweite Spannung (V₂) repräsentative analoge Signal (V₂') zu digitalisieren, und wobei die Rechenvorrichtung (134) dazu konfiguriert ist, die zweite Spannung (V₂) anhand des für die zweite Spannung (V₂) repräsentativen digitalisierten Signals (V₂') über die Zeit zu messen.

9. Elektrisches System (118) nach einem der Ansprüche 1 bis 8, das dazu konfiguriert ist, einen Spannungswandler zu steuern.

## Claims

1. Electrical system (118) including:
- a first positive input terminal (124) and a first negative input terminal (126) intended to be connected respectively to a positive terminal (104) and a negative terminal (106) of a first electric power source (102) which has a first voltage (V₁) between its positive terminal (104) and its negative terminal (106),
- a second positive input terminal (128) and a second negative input terminal (130) intended to be connected respectively to a positive terminal (112) and a negative terminal (114) of a second electric power source (110) which has a second voltage (V₂) between its positive terminal (112) and its negative terminal (114), the second supply voltage (V₂) being greater than the first voltage (V₁),
- an electrical device (122) connected, on one hand, to the first input terminals (124, 126) and, on the other hand, to the second input terminals (128, 130), the electrical device (122) having an electric conduction path between the second positive input terminal (128) and the first negative input terminal (126),
- a first switch (138) via which the electrical device (122) is connected to the second positive input terminal (128),
- a detection device (142) configured to:
- detect whether a voltage (V) between the second positive input terminal (128) and the second negative input terminal (130) is less than or equal to a predefined threshold,
- in the case of such a detection, order the first switch (138) to open,
**characterized in that** it furthermore comprises:
- a second switch (140) via which the electrical device (122) is connected to the second negative input terminal (130), and wherein the detection device (142) is furthermore configured to order the second switch (140) to open in case of detection that the voltage (V) between the second positive input terminal (128) and the second negative input terminal (130) is less than or equal to the predefined threshold.

2. Electrical system (118) according to Claim 1, wherein the predefined threshold is less than 20 V, and for example zero.

3. Electrical system (118) according to Claim 1 or 2, wherein the first switch (138) includes a metal-oxide-semiconductor field-effect transistor.

4. Electrical system (118) according to one of Claims 1 to 3, wherein the second switch (140) includes a metal-oxide-semiconductor field-effect transistor.

5. Electrical system (118) according to any one of Claims 1 to 4, wherein the electrical device (122) is configured to measure the second voltage (V₂) of the second electric power source (110).

6. Electrical system (118) according to Claim 5, wherein the electrical device (122) includes:
- an interface (132) configured to reduce the second voltage (V₂) and to supply a signal (V₂') representative of the second voltage (V₂),
- a calculation device (134) configured to measure, over the course of time, the second voltage (V₂) on the basis of the signal (V₂') representative of the second voltage (V₂) .

7. Electrical system (118) according to Claim 6, wherein the calculation device (134) includes a microcontroller.

8. Electrical system (118) according to Claim 6 or 7, wherein the signal (V₂') representative of the second voltage (V₂) is analogue, wherein the calculation device (134) includes an analogue-digital converter (136) configured to digitize the analogue signal (V₂') representative of the second voltage (V₂), and wherein the calculation device (134) is configured to measure, over the course of time, the second voltage (V₂) on the basis of the digitized signal (V₂') representative of the second voltage (V₂) .

9. Electrical system (118) according to any one of Claims 1 to 8, configured to control a voltage converter.
